# EUROPEAN PATENT APPLICATION

(11) **EP 4 340 460 A1**
(43) Date of publication of application: **20.03.2024**
(21) Application number: 21941183.2
(22) Date of filing: 10.05.2021
(51) Int. Cl.: H04W 48/18, H04W 60/00

(54) **NETWORK SELECTION INFORMATION TRANSMISSION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB
(86) International application number: PCT/CN2021/092849
(87) International publication number: WO 2022/236607

(57) **Abstract**

Provided in the embodiments of the present disclosure is a network selection information transmission method. The method is executed by a first communication node, and the method comprises: sending network selection information to a second communication node, wherein the network selection information indicates at least one network for reselection by a terminal.

## Description

### TECHNICAL FIELD

The present disclosure relates to a field of wireless communication technologies, but is not limited to, the field of wireless communication technologies, and in particular, to a method and apparatus for transmitting network selection information, a communication device and a storage medium.

### BACKGROUND

A standalone Non-public Network (SNPN) has become an important deployment scenario for commercial use of the fifth-generation mobile communication technology (5G), which can provide more professional and higher-quality services. For example, a concert venue can provide more professional and higher-quality music or video services through the SNPN. A public land mobile network (PLMN) can provide common services such as data and voice by utilizing a characteristic of wide coverage. In this way, the user can reasonably select a network to obtain corresponding services as needed, so as to improve user experience.

In the related art, how to remotely control the terminal to reselect a specified SNPN by the network where the terminal resides for a long time is a problem that needs to be considered.

### SUMMARY

Embodiment of the present disclosure discloses a method and apparatus for transmitting network selection information, a communication device, and a storage medium.

According to a first aspect of the embodiments of the present disclosure, a method for transmitting network selection information is provided. The method is performed by a first communication node, and the method includes:
sending the network selection information to a second communication node;
in which the network selection information indicates at least one network for reselection by a terminal.

In one embodiment, the at least one network is a stand-alone non-public network (SNPN).

In one embodiment, the network selection information includes at least one of the following:
first network selection information, configured to indicate at least one SNPN and a priority of selecting the at least one SNPN; or
second network selection information, configured to indicate at least one SNPN group and a priority of selecting the at least one SNPN group, in which the at least one SNPN group includes at least one SNPN.

In one embodiment, the method further includes:
receiving a request message for acquiring the network selection information sent by the second communication node.

In one embodiment, the network selection information further includes feedback indication information, and the feedback indication information is configured to instruct the terminal to send feedback information after receiving the network selection information.

In one embodiment, the method further includes:
determining that the network selection information is not updated; and determining that the network selection information carries a predetermined identifier;
   or,
determining that the network selection information is not updated; and determining that a field indicating the network selection information is set to a predetermined value.

In an embodiment, sending the network selection information to the second communication node further includes:
determining that the network selection information is updated; and
sending updated network selection information to the second communication node.

In one embodiment, the network selection information is included in steering of roaming SoR information; or, the network selection information is included in user equipment UE parameter update UPU information.

According to a second aspect of the embodiments of the present disclosure, a method for transmitting network selection information is provided. The method is performed by a second communication node, and the method includes:
receiving the network selection information sent by a first communication node;
in which the network selection information indicates at least one network for reselection by the terminal.

In one embodiment, the at least one network is an NPN.

In one embodiment, the method further includes:
sending the network selection information to the terminal.

In one embodiment, the network selection information includes at least one of the following:
first network selection information, configured to indicate at least one SNPN and a priority of selecting the at least one SNPN; or
second network selection information, configured to indicate at least one SNPN group and a priority of selecting the at least one SNPN group, in which at least one SNPN group comprises at least one SNPN.

In one embodiment, the method further includes:
receiving a network registration request message sent by the terminal; and
sending a request message for acquiring at least the network selection information to the first communication node.

In one embodiment, the network selection information further includes feedback indication information, and the feedback indication information is configured to instruct the terminal to send feedback information after receiving the network selection information.

In one embodiment, if the network selection information is not updated, the network selection information carries a predetermined identifier; or, if the network selection information is not updated, a field indicating the network selection information is set to a predetermined value.

In one embodiment, the network selection information is included in SoR information; or, the network selection information is included in UPU information.

According to a third aspect of the embodiments of the present disclosure, a method for transmitting network selection information is provided. The method is performed by a terminal, and the method includes:
receiving the network selection information sent by a second communication node;
in which the network selection information indicates at least one network for reselection by the terminal.

In one embodiment, the at least one network is an SNPN.

In one embodiment, the network selection information includes at least one of the following:
first network selection information, configured to indicate at least one SNPN and a priority of selecting the at least one SNPN; or
second network selection information, configured to indicate at least one SNPN group and a priority of selecting the at least one SNPN group, in which the at least one SNPN group comprises at least one SNPN.

In one embodiment, the method further includes:
sending a network registration request message to the second communication node.

In one embodiment, the network selection information further includes feedback indication information, and the feedback indication information is configured to instruct the terminal to send feedback information after receiving the network selection information.

In one embodiment, if the network selection information is not updated, the network selection information carries a predetermined identifier; or, if the network selection information is not updated, a field indicating the network selection information is set to a predetermined value.

In one embodiment, the network selection information is included in SoR information; or, the network selection information is included in UPU information.

According to a fourth aspect of the embodiments of the present disclosure, an apparatus for transmitting network selection information is provided. The apparatus includes:
a sending module, configured to send the network selection information to a second communication node;
in which the network selection information indicates at least one network for reselection by the terminal.

According to a fifth aspect of the embodiments of the present disclosure, an apparatus for transmitting network selection information is provided. The apparatus includes:
a receiving module, configured to receive the network selection information sent by a first communication node;
in which the network selection information indicates at least one network for reselection by the terminal.

According to a sixth aspect of the embodiments of the present disclosure, an apparatus for transmitting network selection information is provided. The apparatus includes:
a receiving module, configured to receive the network selection information sent by a second communication node;
in which the network selection information indicates at least one network for reselection by the terminal.

According to a seventh aspect of the embodiments of the present disclosure, a communication device is provided, and the communication device includes:
a processor;
a memory for storing instructions executable by the processor;
in which the processor is configured to perform the method described in any embodiment of the present disclosure when the executable instructions are executed.

According to an eighth aspect of the embodiments of the present disclosure, a computer storage medium is provided, the computer storage medium stores a computer executable program, and when the computer executable program is executed by a processor, the method described in any embodiment of the present disclosure is implemented.

In the embodiments of the present disclosure, the network selection information is sent to the second communication node. The network selection information indicates at least one network for reselection by the terminal. Here, since the first communication node sends to the second communication node an indication of at least one network for reselection by the terminal, after receiving the network selection information sent by the second communication node, the terminal may perform network reselection according to the network selection information, which makes the reselection of the terminal more efficient and reliable compared to the way in which the network reselection cannot be performed according to the network selection information.

### BRIEF DESCRIPTION OF THE DRAWINGS

Fig. 1 is a schematic structural diagram of a wireless communication system according to an exemplary embodiment.
Fig. 2 is a schematic flowchart illustrating a method for transmitting network selection information according to an exemplary embodiment.
Fig. 3 is a schematic flowchart illustrating a method for transmitting network selection information according to an exemplary embodiment.
Fig. 4 is a schematic flowchart illustrating a method for transmitting network selection information according to an exemplary embodiment.
Fig. 5 is a schematic flowchart illustrating a method for transmitting network selection information according to an exemplary embodiment.
Fig. 6 is a schematic flowchart illustrating a method for transmitting network selection information according to an exemplary embodiment.
Fig. 7 is a schematic flowchart illustrating a method for transmitting network selection information according to an exemplary embodiment.
Fig. 8 is a schematic flowchart illustrating a method for transmitting network selection information according to an exemplary embodiment.
Fig. 9 is a schematic flowchart illustrating a method for transmitting network selection information according to an exemplary embodiment.
Fig. 10 is a schematic flowchart illustrating a method for transmitting network selection information according to an exemplary embodiment.
Fig. 11 is a schematic flowchart illustrating a method for transmitting network selection information according to an exemplary embodiment.
Fig. 12 is a schematic flowchart illustrating a method for transmitting network selection information according to an exemplary embodiment.
Fig. 13 is a schematic flowchart illustrating a method for transmitting network selection information according to an exemplary embodiment.
Fig. 14 is a block diagram illustrating an apparatus for transmitting network selection information according to an exemplary embodiment.
Fig. 15 is a block diagram illustrating an apparatus for transmitting network selection information according to an exemplary embodiment.
Fig. 16 is a block diagram illustrating an apparatus for transmitting network selection information according to an exemplary embodiment.
Fig. 17 is a schematic structural diagram illustrating a terminal according to an exemplary embodiment.
Fig. 18 is a block diagram illustrating a base station according to an exemplary embodiment.

### DETAILED DESCRIPTION

Reference will now be made herein in detail to exemplary embodiments, examples of which are illustrated in the accompanying drawings. The following description refers to the accompanying drawings in which same numbers in different accompanying drawings represent the same or similar elements unless otherwise represented. The implementations set forth in the following description of exemplary embodiments do not represent all implementations consistent with embodiment of the disclosure. Instead, they are merely examples of apparatuses and methods consistent with some aspects related to embodiments of the disclosure as recited in the appended claims.

The terms used in the embodiments of the disclosure are only for the purpose of describing specific embodiments, and are not intended to limit the disclosure. The singular forms "a", "the" and "said" used in the embodiments of the present disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

For purpose of simplicity and ease of understanding, the terms "greater than", "less than", "higher than" and "lower than" are used in the disclosure, to represent size relations. However, it can be understood by those skilled in the art that the term "greater than" also covers the meaning of "greater than or equal to", and "less than" also covers the meaning of "less than or equal to". The term "higher than" covers the meaning of "higher than or equal to", and the term "less than" also covers the meaning of "less than or equal to".

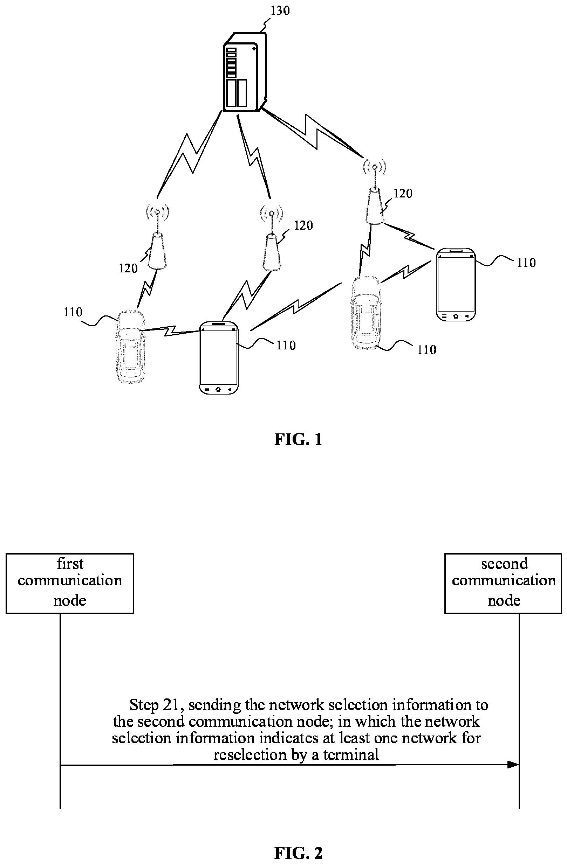

FIG. 1 is a schematic structural diagram illustrating a wireless communication system provided in an embodiment of the present disclosure. As illustrated in FIG. 1, the wireless communication system is a communications system based on a cellular mobile communication technology. The wireless communication system may include several user devices 110 and several base stations 120.

The user device 110 may refer to a device that provides voice and/or data connectivity to a user. The user device 110 may communicate with one or more core networks via a radio access network (RAN). The user device 110 may be an internet of things user device, for example, a sensor device, a mobile phone and a computer having an internet of things user device, for example, may be a fixed, portable, handheld, computer built-in or vehicle-mounted apparatus, for example, a station (STA), a subscriber unit, a subscriber station, a mobile station, a mobile, a remote station, an access point, a remote terminal, an access terminal, a user terminal, a user agent, a user device or a user equipment (UE). Or, the user device 110 may be a device of an unmanned aerial vehicle. Or, the user device 110 may be a vehicle-mounted device, for example, may be an electronic control unit with a wireless communication function, or a wireless user device externally connected to the electronic control unit. Or, the user device 110 may be a roadside device, for example, may be a street lamp with the wireless communication function, a signal light or other roadside devices, and the like.

The base station 120 may be a network side device in the wireless communication system. The wireless communication system may be a 4th generation mobile communication (4G) system, also referred to as a long term evolution (LTE) system; or the wireless communication system may be a 5G system, also referred to as a new radio (NR) system or a 5G NR system. Or, the wireless communication system may be a next generation system of the 5G system. An access network in a 5G system may be referred to as a new generation-radio access network (NG-RAN).

The base station 120 may be an eNB adopted in the 4G system. Or, the base station 120 may be a base station (gNB) with a centralized distributed architecture in the 5G system. When the base station 120 adopts the centralized distributed architecture, the base station 120 generally includes a central unit (CU) and at least two distributed units (DU). Protocol stacks of a packet data convergence protocol (PDCP) layer, a radio link control (RLC) layer and a media access control (MAC) layer are configured in the CU; a physical (PHY) layer protocol stack is configured in the DU. The specific implementation of the base station 120 is not limited in the embodiments of the disclosure.

The base station 120 may establish a wireless connection with the user device 110 via a wireless air interface. In different implementations, the wireless air interface is a wireless air interface based on a 4G standard; or, the wireless air interface is a wireless air interface based on a 5G standard. For example, the wireless air interface is a new radio interface; or, the wireless air interface may be a wireless air interface based on a standard of next generation mobile communication network technology of the 5G.

In some embodiments, an end to end (E2E) connection can also be established between the user devices 110, for example, in vehicle to vehicle (V2V) communication, vehicle to infrastructure (V2I) communication, vehicle to pedestrian (V2P) communication and the like in vehicle to everything (V2X) communication.

Here, the above-mentioned user device may be considered to be a terminal device in the following embodiments.

In some embodiment, the above wireless communication system may further include a network management device 130.

The several base stations 120 are connected with the network management device 130 respectively. The network management device 130 may be a core network device in the wireless communication system, for example, the network management device 130 may be a mobility management entity (MME) in an evolved packet core (EPC) network. Or, the network management device may be other core network devices, for example, a serving gateway (SGW), a public data network gateway (PGW), a policy and charging rules function (PCRF) or a home subscriber server (HSS), and the like. The implementation of the network management device 130 is not limited in the embodiments of the present disclosure.

In order to facilitate understanding of those skilled in the art, the embodiments of the present disclosure list multiple implementation manners to clearly illustrate the technical solution of the embodiments of the present disclosure. Of course, those skilled in the art can understand that the multiple embodiments provided by the present disclosure can be implemented alone or in combination with the methods of other embodiments in the present disclosure, and can also be alone or in an combination manner implemented together with some methods in other related technologies, which is not limited in the embodiments of the present disclosure.

As shown in FIG. 2, a method for transmitting network selection information is provided in the embodiment. The method is performed by a first communication node, and the method includes the following.

At block 21, the network selection information is sent to a second communication node.

The network selection information indicates at least one network for reselection by a terminal.

In an embodiment, the first communication node may be a unified data management (UDM). The second communication node may be an access and mobility management function (AMF) or a mobility management entity (MME), etc. The AMF may transmit data to the terminal through a base station. Here, the base station is an interface device for the terminal to access the network.

In some embodiments, the terminal may be, but not limited to, a mobile phone, a wearable device, a vehicle-mounted terminal, a road side unit (RSU), a smart home terminal, an industrial sensor device or a medical device, etc.

In some embodiments, the base station may be various types of base stations, for example, a base station of a third-generation mobile communication (3G) network, a base station of a fourth-generation mobile communication (4G) network, a base station of a fifth-generation mobile communication (5G) network or other evolved base stations.

In an embodiment, the network selection information may include identification information of networks available for reselection by the terminal. For example, the networks available for reselection by the terminal include a first network, a second network and a third network. Identifiers of the first network, the second network and the third network are ID1, ID2 and ID3 respectively. Here, the first network, the second network and the third network may all be SNPNs. In this way, the terminal can select any one of the first network, the second network and the third network for reselection. In this way, the terminal can quickly and reliably complete network reselection.

In an embodiment, the network selection information may include identification information of networks available for reselection by the terminal and priorities of corresponding networks. For example, the networks available for reselection by the terminal include a first network, a second network and a third network. Here, the first network, the second network and the third network may all be SNPNs. Identifiers of the first network, the second network and the third network are ID1, ID2 and ID3 respectively, and the corresponding priorities are a first priority, a second priority and a third priority respectively. The first priority is higher than the second priority, and the second priority is higher than the third priority. In this way, when the terminal performs network reselection, the terminal can preferentially select the first network with the first priority for reselection, and if the reselection of the first network fails, the terminal selects the second network with the second priority for reselection or selects the third network with the third priority for reselection.

In one embodiment, the priority of reselecting the network is determined according to a transmission bandwidth of the network. In one embodiment, in response to a transmission bandwidth of the first network being greater than a transmission bandwidth of the second network, it is determined that a priority of reselecting the first network is higher than a priority of reselecting the second network. In response to the transmission bandwidth of the first network being smaller than the transmission bandwidth of the second network, it is determined that the priority of reselecting the first network is lower than the priority of reselecting the second network.

In an embodiment, the priority of the network may be explicitly indicated by the network selection information. For example, a priority identifier is used to indicate the priority of the network. The networks available for reselection by the terminal include a first network, a second network and a third network. Here, the first network, the second network and the third network may all be SNPNs. The priority identifiers of the first network, the second network and the third network are U1, U2 and U3 respectively. The priority indicated by U1 is higher than the priority indicated by U2, and the priority indicated by U2 is higher than the priority indicated by U3.

In an embodiment, the priority of the network may be implicitly indicated by the network selection information. For example, the networks available for reselection by the terminal include a first network, a second network and a third network. Here, the first network, the second network and the third network may all be SNPNs. Identifiers of the first network, the second network and the third network are arranged in order in the field, then the priority of reselecting the first network is higher than the priority of reselecting the second network, and the priority of reselecting the second network is higher than the priority of reselecting the third network.

In an embodiment, the network selection information may include identification information of network groups available for reselection by the terminal. For example, the network groups available for reselection by the terminal include a first network group, a second network group and a third network group. Each network group includes at least one network. Identifiers of the first network group, the second network group and the third network group are ID 1, ID2 and ID3 respectively. Here, networks in the first network group, the second network group and the third network group may all be SNPNs. In this way, the terminal can select any network from the first network group, the second network group and the third network group for reselection. In this way, the terminal can quickly and reliably complete network reselection.

In an embodiment, the network selection information may include identification information of network groups to which the networks available for reselection by the terminal belong and priorities of the corresponding network groups. For example, the network groups to which the networks available for reselection by the terminal belong include a first network group, a second network group and a third network group. Here, networks in the first network group, the second network group and the third network group may all be SNPNs. Identifiers of the first network group, the second network group and the third network group are ID 1, ID2 and ID3 respectively, and the corresponding priorities are a first priority, a second priority and a third priority respectively. The first priority is higher than the second priority, and the second priority is higher than the third priority. In this way, when the terminal performs network reselection, the terminal can preferentially select the network in the first network group with the first priority for reselection, and if the reselection of the network in the first network group fails, then the terminal selects the network in the second network group with the second priority for reselection, or selects the network in the third network group with the third priority for reselection.

In an embodiment, according to a transmission bandwidth of the network in the network group, the priority of reselecting the network in the network group is determined. In an embodiment, in response to a transmission bandwidth of the network in the first network group being greater than a transmission bandwidth of the network in the second network group, it is determined that the priority of reselecting the network in the first network group is higher than the priority of reselecting the network in the second network group. In response to the transmission bandwidth of the network in the first network group being smaller than the transmission bandwidth of the network in the second network group, it is determined that the priority of reselecting the network in the first network group is lower than the priority of reselecting the network in the second network group.

In an embodiment, the priority of the network group may be explicitly indicated by the network selection information. For example, a priority identifier is used to indicate the priority of the network group. The network groups available for reselection by the terminal include a first network group, a second network group and a third network group. Here, networks in the first network group, the second network group and the third network group may all be SNPNs. The priority identifiers of the first network group, the second network group and the third network group are U1, U2 and U3 respectively. The priority indicated by U1 is higher than the priority indicated by U2, and the priority indicated by U2 is higher than the priority indicated by U3.

In an embodiment, the priority of the network group may be implicitly indicated by the network selection information. For example, the network groups available for reselection by the terminal include a first network group, a second network group and a third network group. Here, networks in the first network, the second network and the third network may all be SNPNs. Identifiers of the first network group, the second network group and the third network group are arranged in order in the field, then the priority of reselecting the network in the first network group is higher than the priority of reselecting the network in the second network group, the priority of reselecting the network in the second network group is higher than the priority of reselecting the network in the third network group.

In an embodiment, referring to Table 1, the network selection information is explicitly indicated in a list form. Here, the networks available for reselection by the terminal include the first network, the second network and the third network, the corresponding network identifiers are SNPN ID1, SNPN ID2 and SNPN ID3 respectively, and the corresponding priorities are U1, U2 and U3 respectively. Here, the priority indicated by U1 is greater than the priority indicated by U2, and the priority indicated by U2 is greater than the priority indicated by U3.

**Table 1**

| Network | Network identifier | Priority identifier |
|---|---|---|
| first network | SNPN ID1 | U1 |
| second network | SNPN ID2 | U2 |
| third network | SNPN ID3 | U3 |

In an embodiment, referring to Table 2, the network selection information is implicitly indicated in a list form. Here, the networks available for reselection by the terminal include the first network, the second network and the third network, and the corresponding network identifiers are SNPN ID1, SNPN ID2 and SNPN ID3 respectively, and the identifiers are arranged in order in the field. The priority of the first network is higher than the priority of the second network, and the priority of the second network is higher than the priority of the third network.

**Table 2**

| Network | Network identifier |
|---|---|
| first network | SNPN ID1 |
| second network | SNPN ID2 |
| third network | SNPN ID3 |

In an embodiment, referring to Table 3, the network selection information is explicitly indicated in a list form. Here, the network groups to which the networks available for reselection by the terminal belong include the first network group, the second network group and the third network group, and the identifiers of the corresponding network groups are SNPN ID1, SNPN ID2 and SNPN ID3 respectively, and the corresponding priorities are U1, U2 and U3 respectively. Here, the priority indicated by U1 is greater than the priority indicated by U2, and the priority indicated by U2 is greater than the priority indicated by U3. The first network group includes network 1, network 2 and network 3; the second network group includes network 4, network 5 and network 6; and the third network group includes network 7, network 8 and network 9.

**Table 3**

| Network group | Network | Network identifier | | Priority identifier | |
|---|---|---|---|---|---|
| first network | network 1 | | SNPN ID1 | | U1 |
| | network 2 | | | | |
| | network 3 | | | | |
| second network | network 4 | | SNPN ID2 | | U2 |
| | network 5 | | | | |
| | network 6 | | | | |
| third network | network 7 | | SNPN ID3 | | U3 |
| | network 8 | | | | |
| | network 9 | | | | |

In an embodiment, the first communication node sends the network selection information to the second communication node by using a steering of roaming (SoR) message.

In another embodiment, the first communication node sends the network selection information to the second communication node by using a UE parameter update (UPU) message.

In an embodiment, the first communication node may send the network selection information to the second communication node. After receiving the network selection information, the second communication node sends the network selection information to the terminal. After receiving the network selection information, the terminal can perform network reselection according to the network selection information.

In an embodiment, the terminal sends a network registration request message to the second communication node. After the second communication node receives the network registration request message, the second communication node sends a request message for acquiring the network selection information to the first communication node according to context information saved in the second communication node. After receiving the request message for acquiring the network selection information, the first communication node sends the network selection information to the second communication node. After receiving the network selection information, the second communication node sends the network selection information to the terminal. After receiving the network selection information, the terminal can perform network reselection according to the network selection information.

In an embodiment, if the network selection information is updated, the network selection information is sent to the second communication node. In another embodiment, the network selection information may also be sent to the second communication node periodically. Here, updating the network selection information may refer to addition, change, or priority change of the at least one network indicated by the network selection information.

In an embodiment of the present disclosure, the network selection information is sent to the second communication node. The network selection information indicates at least one network for reselection by the terminal. Here, since the first communication node sends an indication of at least one network for reselection by the terminal to the second communication node, after receiving the network selection information sent by the second communication node, the terminal can perform network selection based on the network selection information, which makes the reselection of the terminal more efficient and reliable compared to the way in which the network reselection cannot be performed according to the network selection information.

It should be noted that those skilled in the art can understand that the methods provided in the embodiments of the present disclosure may be executed alone, or together with some methods in the embodiments of the present disclosure or some methods in the related art.

In an embodiment, the network selection information includes at least one of the following:
first network selection information, configured to indicate at least one SNPN and a priority of selecting the at least one SNPN; or
second network selection information, configured to indicate at least one SNPN group and a priority of selecting the at least one SNPN group, in which the at least one SNPN group includes at least one SNPN.

In an embodiment, the network selection information may include identification information of networks available for reselection by the terminal. For example, the networks available for reselection by the terminal include a first network, a second network and a third network. Identifiers of the first network, the second network and the third network are ID1, ID2 and ID3 respectively. Here, the first network, the second network and the third network may all be SNPNs. In this way, the terminal can select any one of the first network, the second network and the third network for reselection. In this way, the terminal can quickly and reliably complete network reselection.

In an embodiment, the network selection information may include identification information of networks available for reselection by the terminal and priorities of the corresponding networks. For example, the networks available for reselection by the terminal include a first network, a second network and a third network. Here, the first network, the second network and the third network may all be SNPNs. Identifiers of the first network, the second network and the third network are ID1, ID2 and ID3 respectively, and the corresponding priorities are a first priority, a second priority and a third priority respectively. The first priority is higher than the second priority, and the second priority is higher than the third priority. In this way, when the terminal performs network reselection, the terminal can preferentially select the first network with the first priority for reselection, and if the reselection of the first network fails, the terminal selects the second network with the second priority for reselection or selects the third network with the third priority for reselection.

In an embodiment, the priority of reselecting the network is determined according to a transmission bandwidth of the network. In an embodiment, in response to a transmission bandwidth of the first network being greater than a transmission bandwidth of the second network, it is determined that a priority of reselecting the first network is higher than a priority of reselecting the second network. In response to the transmission bandwidth of the first network being smaller than the transmission bandwidth of the second network, it is determined that the priority of reselecting the first network is lower than the priority of reselecting the second network.

In an embodiment, the priority of the network may be explicitly indicated by the network selection information. For example, a priority identifier is used to indicate the priority of the network. The networks available for reselection by the terminal include a first network, a second network and a third network. Here, the first network, the second network and the third network may all be SNPNs. The priority identifiers of the first network, the second network and the third network are U1, U2 and U3 respectively. The priority indicated by U1 is higher than the priority indicated by U2, and the priority indicated by U2 is higher than the priority indicated by U3.

In an embodiment, the priority of the network may be implicitly indicated by the network selection information. For example, the networks available for reselection by the terminal include a first network, a second network and a third network. Here, the first network, the second network and the third network may all be SNPNs. Identifiers of the first network, the second network and the third network are arranged in order in the field, then the priority of reselecting the first network is higher than the priority of reselecting the second network, and the priority of reselecting the second network is higher than the priority of reselecting the third network.

In an embodiment, the network selection information may include identification information of network groups available for reselection by the terminal. For example, the network groups available for reselection by the terminal include a first network group, a second network group and a third network group. Each network group includes at least one network. Identifiers of the first network group, the second network group and the third network group are ID1, ID2 and ID3 respectively. Here, networks in the first network group, the second network group and the third network group may all be SNPNs. In this way, the terminal can select any network from the first network group, the second network group and the third network group for reselection. In this way, the terminal can quickly and reliably complete network reselection.

In an embodiment, the network selection information may include identification information of network groups to which the networks available for reselection by the terminal belong and priorities of the corresponding network groups. For example, the network groups to which the networks available for reselection by the terminal belong include a first network group, a second network group and a third network group. Here, networks in the first network group, the second network group and the third network group may all be SNPNs. Identifiers of the first network group, the second network group and the third network group are ID1, ID2 and ID3 respectively, and the corresponding priorities are a first priority, a second priority and a third priority respectively. The first priority is higher than the second priority, and the second priority is higher than the third priority. In this way, when the terminal performs network reselection, the terminal can preferentially select the network in the first network group with the first priority for reselection, and if the reselection of the network in the first network group fails, then the terminal selects the network in the second network group with the second priority for reselection, or selects the network in the third network group with the third priority for reselection.

In an embodiment, according to a transmission bandwidth of the network in the network group, the priority of reselecting the network in the network group is determined. In an embodiment, in response to a transmission bandwidth of the network in the first network group being greater than a transmission bandwidth of the network in the second network group, it is determined that the priority of reselecting the network in the first network group is higher than the priority of reselecting the network in the second network group. In response to the transmission bandwidth of the network in the first network group being smaller than the transmission bandwidth of the network in the second network group, it is determined that the priority of reselecting the network in the first network group is lower than the priority of reselecting the network in the second network group.

In an embodiment, the priority of the network group may be explicitly indicated by the network selection information. For example, a priority identifier is used to indicate the priority of the network group. The network groups available for reselection by the terminal include a first network group, a second network group and a third network group. Here, networks in the first network group, the second network group and the third network group may all be SNPNs. The priority identifiers of the first network group, the second network group and the third network group are U1, U2 and U3 respectively. The priority indicated by U1 is higher than the priority indicated by U2, and the priority indicated by U2 is higher than the priority indicated by U3.

In an embodiment, the priority of the network group may be implicitly indicated by the network selection information. For example, the network groups available for reselection by the terminal include a first network group, a second network group and a third network group. Here, networks in the first network, the second network and the third network may all be SNPNs. The identifiers of the first network group, the second network group and the third network group are arranged in order in the field, then the priority of reselecting the network in the first network group is higher than the priority of reselecting the network in the second network group, the priority of reselecting the network in the second network group is higher than the priority of reselecting the network in the third network group.

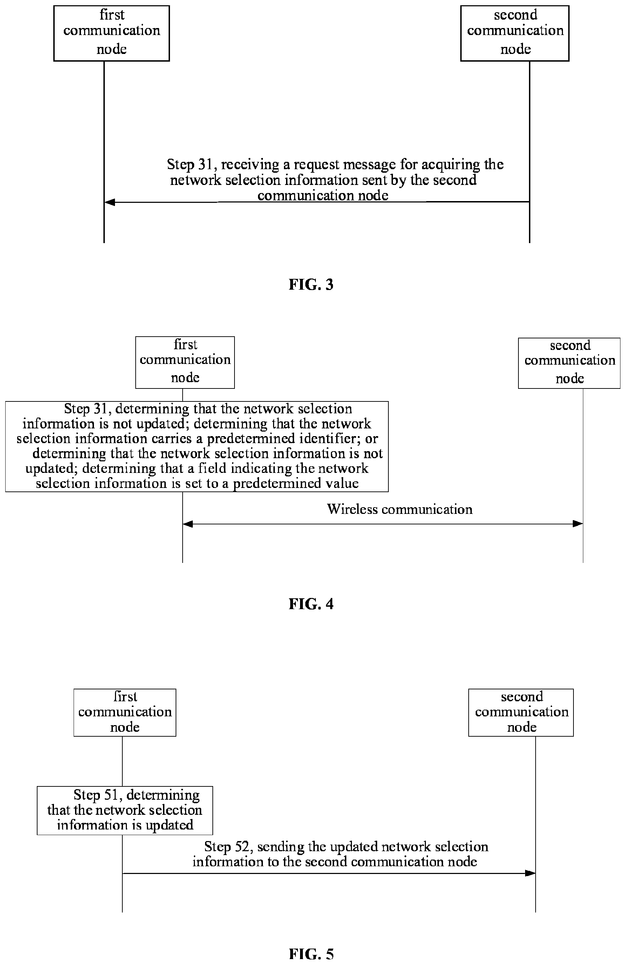

As shown in FIG. 3, a method for transmitting network selection information is provided in the embodiment. The method is performed by a first communication node, and the method includes the following.

At block 31, a request message for acquiring the network selection information sent by a second communication node is received.

In an embodiment, a terminal sends a network registration request message to the second communication node. After the second communication node receives the network registration request message, the second communication node sends the request message for acquiring the network selection information to the first communication node according to context information saved in the second communication node. After receiving the request message for acquiring the network selection information, the first communication node sends the network selection information to the second communication node. After receiving the network selection information, the second communication node sends the network selection information to the terminal. After receiving the network selection information, the terminal can perform network reselection according to the network selection information.

In an embodiment, after receiving the request message for acquiring the network selection information sent by the second communication node, the first communication node may use a steering of roaming (SoR) message to send the network selection information to the second communication node.

In another embodiment, after receiving the request message for acquiring the network selection information sent by the second communication node, the first communication node may use a user equipment (UE) parameter update (UPU) message to send the network selection information to the second communication node.

It should be noted that those skilled in the art can understand that the methods provided in the embodiments of the present disclosure may be performed independently, or together with some methods in the embodiments of the present disclosure or some methods in the related art.

In an embodiment, the network selection information further includes feedback indication information, and the feedback indication information is configured to instruct the terminal to send feedback information after receiving the network selection information.

In an embodiment, if the network selection information received by the terminal includes the feedback indication information, the terminal sends the feedback information to the network after successfully receiving the network selection information.

In another embodiment, if the network selection information received by the terminal does not include the feedback indication information, the terminal does not send the feedback information to the network after successfully receiving the network selection information.

In an embodiment, a new field may be added to the field where the network selection information is located, and the new field is used to indicate the feedback indication information.

As shown in FIG. 4, a method for transmitting network selection information is provided in the embodiment. The method is performed by a first communication node, and the method includes the following.

At block 41, it is determined that the network selection information is not updated; it is determined that the network selection information carries a predetermined identifier;
or,
it is determined that the network selection information is not updated; it is determined that a field indicating the network selection information is set to a predetermined value.

In an embodiment, before sending the network selection information to the second communication node, the network selection information at the current moment is compared with the network selection information sent last time to determine whether the network selection information changes. If the network selection information changes, it is determined that the network selection information is updated; if the network selection information does not change, it is determined that the network selection information is not updated.

In an embodiment, if the network selection information is not updated, the network selection information carries a predetermined identifier indicating that the network selection information does not change. After receiving the network selection information carrying the predetermined identifier, the terminal determines that the network selection information is not updated.

In another embodiment, if the network selection information is not updated, the field indicating the network selection information may be set to the predetermined value. Here, the predetermined value may be a null value. After the terminal determines that the field indicating the network selection information is set to the predetermined value, the terminal determines that the network selection information is not updated.

It should be noted that those skilled in the art can understand that the methods provided in the embodiments of the present disclosure may be performed independently, or together with some methods in the embodiments of the present disclosure or some methods in the related art.

As shown in FIG. 5, a method for transmitting network selection information is provided in the embodiment. The method is performed by a first communication node, and the method includes the following.

At block 51, it is determined that the network selection information is updated.

At block 52, the updated network selection information is sent to the second communication node.

In an embodiment, before sending the network selection information to the second communication node, the network selection information at the current moment is compared with the network selection information sent last time to determine whether the network selection information changes. If the network selection information changes, it is determined that the network selection information is updated; if the network selection information does not change, it is determined that the network selection information is not updated.

In an embodiment, the first communication node may use a UPU message to send the network selection information to the second communication node. Here, it should be noted that the first communication node may send the network selection information to the second communication node by using the UPU message when the first communication node does not receive a request message for acquiring the network selection information by the terminal.

It should be noted that those skilled in the art can understand that the methods provided in the embodiments of the present disclosure may be performed independently, or together with some methods in the embodiments of the present disclosure or some methods in the related art.

In an embodiment, the network selection information is included in SoR information; or, the network selection information is included in UPU information.

In an embodiment, after receiving the request message for acquiring the network selection information sent by the second communication node, the first communication node may use an SoR message to send the network selection information to the second communication node.

In another embodiment, after receiving the request message for acquiring the network selection information sent by the second communication node, the first communication node may use a UPU message to send the network selection information to the second communication node.

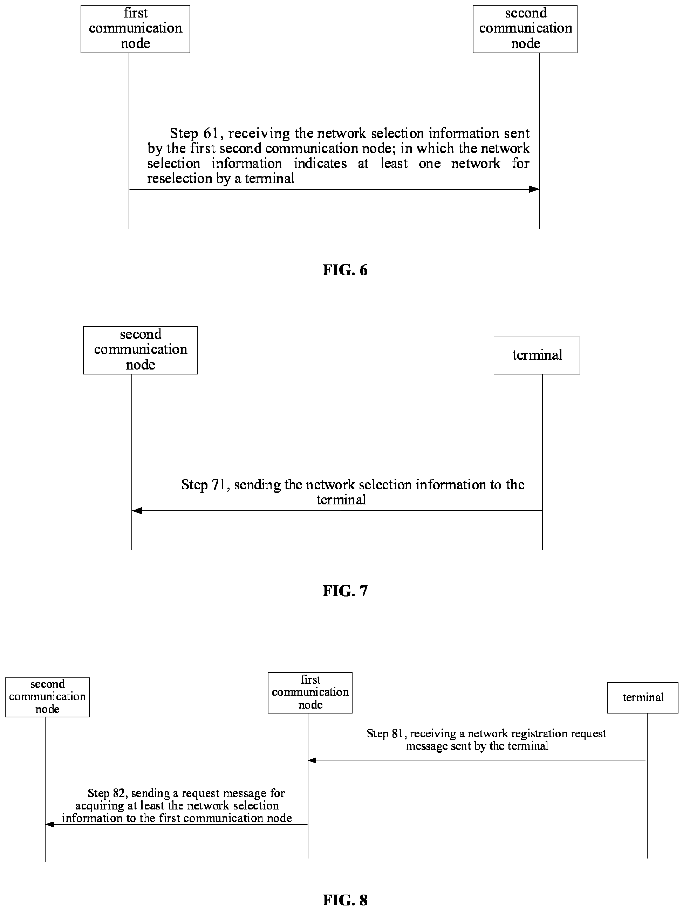

As shown in FIG. 6, a method for transmitting network selection information is provided in the embodiment. The method is performed by a second communication node, and the method includes the following.

At block 61, the network selection information sent by a first communication node is received.

The network selection information indicates at least one network for reselection by the terminal.

In an embodiment, the first communication node may be a unified data management (UDM, unified data management). The second communication node may be an access and mobility management function (AMF) or a mobility management entity (MME), etc. The AMF may transmit data to a terminal through a base station. Here, the base station is an interface device for the terminal to access the network. In an embodiment, the network is an SNPN.

In some embodiments, the terminal may be, but not limited to, a mobile phone, a wearable device, a vehicle-mounted terminal, a road side unit (RSU), a smart home terminal, an industrial sensor device or a medical device, etc.

In some embodiments, the base station may be various types of base stations, for example, a base station of a third-generation mobile communication (3G) network, a base station of a fourth-generation mobile communication (4G) network, a base station of a fifth-generation mobile communication (5G) network or other evolved base stations.

In an embodiment, the network selection information may include identification information of networks available for reselection by the terminal. For example, the networks available for reselection by the terminal include a first network, a second network and a third network. Identifiers of the first network, the second network and the third network are ID1, ID2 and ID3 respectively. Here, the first network, the second network and the third network may all be SNPNs. In this way, the terminal can select any one of the first network, the second network and the third network for reselection. In this way, the terminal can quickly and reliably complete network reselection.

In an embodiment, the network selection information may include identification information of networks available for reselection by the terminal and priorities of the corresponding networks. For example, the networks available for reselection by the terminal include a first network, a second network and a third network. Here, the first network, the second network and the third network may all be SNPNs. Identifiers of the first network, the second network and the third network are ID1, ID2 and ID3 respectively, and the corresponding priorities are a first priority, a second priority and a third priority respectively. The first priority is higher than the second priority, and the second priority is higher than the third priority. In this way, when the terminal performs network reselection, the terminal can preferentially select the first network with the first priority for reselection, and if the reselection of the first network fails, the terminal selects the second network with the second priority for reselection or selects the third network with the third priority for reselection.

In an embodiment, the priority of reselecting the network is determined according to a transmission bandwidth of the network. In an embodiment, in response to a transmission bandwidth of the first network being greater than a transmission bandwidth of the second network, it is determined that a priority of reselecting the first network is higher than a priority of reselecting the second network. In response to the transmission bandwidth of the first network being smaller than the transmission bandwidth of the second network, it is determined that the priority of reselecting the first network is lower than the priority of reselecting the second network.

In an embodiment, the priority of the network may be explicitly indicated by the network selection information. For example, a priority identifier is used to indicate the priority of the network. The networks available for reselection by the terminal include a first network, a second network and a third network. Here, the first network, the second network and the third network may all be SNPNs. The priority identifiers of the first network, the second network and the third network are U1, U2 and U3 respectively. The priority indicated by U1 is higher than the priority indicated by U2, and the priority indicated by U2 is higher than the priority indicated by U3.

In an embodiment, the priority of the network may be implicitly indicated by the network selection information. For example, the networks available for reselection by the terminal include a first network, a second network and a third network. Here, the first network, the second network and the third network may all be SNPNs. Identifiers of the first network, the second network and the third network are arranged in order in the field, then the priority of reselecting the first network is higher than the priority of reselecting the second network, and the priority of reselecting the second network is higher than the priority of reselecting the third network.

In an embodiment, the network selection information may include identification information of network groups available for reselection by the terminal. For example, the network groups available for reselection by the terminal include a first network group, a second network group and a third network group. Each network group includes at least one network. Identifiers of the first network group, the second network group and the third network group are ID 1, ID2 and ID3 respectively. Here, networks in the first network group, the second network group and the third network group may all be SNPNs. In this way, the terminal can select any network from the first network group, the second network group and the third network group for reselection. In this way, the terminal can quickly and reliably complete network reselection.

In an embodiment, the network selection information may include identification information of network groups to which the networks available for reselection by the terminal belong and priorities of the corresponding network groups. For example, the network groups to which the networks available for reselection by the terminal belong include a first network group, a second network group and a third network group. Here, networks in the first network group, the second network group and the third network group may all be SNPNs. Identifiers of the first network group, the second network group and the third network group are ID 1, ID2 and ID3 respectively, and the corresponding priorities are a first priority, a second priority and a third priority respectively. The first priority is higher than the second priority, and the second priority is higher than the third priority. In this way, when the terminal performs network reselection, the terminal can preferentially select the network in the first network group with the first priority for reselection, and if the reselection of the network in the first network group fails, the terminal selects the network in the second network group with the second priority for reselection, or selects the network in the third network group with the third priority for reselection.

In an embodiment, according to a transmission bandwidth of the network in the network group, the priority of reselecting the network in the network group is determined. In an embodiment, in response to a transmission bandwidth of the network in the first network group being greater than a transmission bandwidth of the network in the second network group, it is determined that the priority of reselecting the network in the first network group is higher than the priority of reselecting the network in the second network group. In response to the transmission bandwidth of the network in the first network group being smaller than the transmission bandwidth of the network in the second network group, it is determined that the priority of reselecting the network in the first network group is lower than the priority of reselecting the network in the second network group.

In an embodiment, the priority of the network group may be explicitly indicated by the network selection information. For example, a priority identifier is used to indicate the priority of the network group. The network groups available for reselection by the terminal include a first network group, a second network group and a third network group. Here, networks in the first network group, the second network group and the third network group may all be SNPNs. The priority identifiers of the first network group, the second network group and the third network group are U1, U2 and U3 respectively. The priority indicated by U1 is higher than the priority indicated by U2, and the priority indicated by U2 is higher than the priority indicated by U3.

In an embodiment, the priority of the network group may be implicitly indicated by the network selection information. For example, the network groups available for reselection by the terminal include a first network group, a second network group and a third network group. Here, networks in the first network, the second network and the third network may all be SNPNs. Identifiers of the first network group, the second network group and the third network group are arranged in order in the field, then the priority of reselecting the network in the first network group is higher than the priority of reselecting the network in the second network group, the priority of reselecting the network in the second network group is higher than the priority of reselecting the network in the third network group.

In an embodiment, referring to Table 1 again, the network selection information is explicitly indicated in a list form. Here, the networks available for reselection by the terminal include the first network, the second network and the third network, the corresponding network identifiers are SNPN ID1, SNPN ID2 and SNPN ID3 respectively, and the corresponding priorities are U1, U2 and U3 respectively. Here, the priority indicated by U1 is greater than the priority indicated by U2, and the priority indicated by U2 is greater than the priority indicated by U3.

In an embodiment, referring to Table 2 again, the network selection information is implicitly indicated in a list form. Here, the networks available for reselection by the terminal include the first network, the second network and the third network, and the corresponding network identifiers are SNPN ID1, SNPN ID2 and SNPN ID3 respectively, and the identifiers are arranged in order in the field. The priority of the first network is higher than the priority of the second network, and the priority of the second network is higher than the priority of the third network.

In an embodiment, referring to Table 3 again, the network selection information is explicitly indicated in a list form. Here, the network groups to which the networks available for reselection by the terminal belong include the first network group, the second network group and the third network group, and the identifiers of the corresponding network groups are SNPN ID1, SNPN ID2 and SNPN ID3 respectively, and the corresponding priorities are U1, U2 and U3 respectively. Here, the priority indicated by U1 is greater than the priority indicated by U2, and the priority indicated by U2 is greater than the priority indicated by U3. The first network group includes network 1, network 2 and network 3; the second network group includes network 4, network 5 and network 6; and the third network group includes network 7, network 8 and network 9.

In an embodiment, the first communication node sends the network selection information to the second communication node by using an SoR message.

In another embodiment, the first communication node sends the network selection information to the second communication node by using a UPU message.

In an embodiment, the first communication node may send the network selection information to the second communication node. After receiving the network selection information, the second communication node sends the network selection information to the terminal. After receiving the network selection information, the terminal can perform network reselection according to the network selection information.

In an embodiment, the terminal sends a network registration request message to the second communication node. After the second communication node receives the network registration request message, the second communication node sends a request message for acquiring the network selection information to the first communication node according to context information saved in the second communication node. After receiving the request message for acquiring the network selection information, the first communication node sends the network selection information to the second communication node. After receiving the network selection information, the second communication node sends the network selection information to the terminal. After receiving the network selection information, the terminal can perform network reselection according to the network selection information.

In an embodiment, if the network selection information is updated, the network selection information is sent to the second communication node. In another embodiment, the network selection information may also be sent to the second communication node periodically. Here, updating the network selection information may refer to addition, change, or priority change of the at least one network indicated by the network selection information.

It should be noted that those skilled in the art can understand that the methods provided in the embodiments of the present disclosure may be performed independently, or together with some methods in the embodiments of the present disclosure or some methods in the related art.

As shown in FIG. 7, a method for transmitting network selection information is provided in the embodiment. The method is performed by a second communication node, and the method includes the following.

At block 71, the network selection information is sent to the terminal.

In an embodiment, the second communication node receives the network selection information sent by the first communication node using an SoR message, and sends the network selection information to the terminal.

In another embodiment, the second communication node receives the network selection information sent by the first communication node using a UPU message, and sends the network selection information to the terminal.

It should be noted that those skilled in the art can understand that the methods provided in the embodiments of the present disclosure may be performed independently, or together with some methods in the embodiments of the present disclosure or some methods in the related art.

In an embodiment, the network selection information includes at least one of the following:
first network selection information, configured to indicate at least one SNPN and a priority of selecting the at least one SNPN; or
second network selection information, configured to indicate at least one SNPN group and a priority of selecting the at least one SNPN group, in which the at least one SNPN group includes at least one SNPN.

In an embodiment, the network selection information may include identification information of networks available for reselection by the terminal. For example, the networks available for reselection by the terminal include a first network, a second network and a third network. Identifiers of the first network, the second network and the third network are ID1, ID2 and ID3 respectively. Here, the first network, the second network and the third network may all be SNPNs. In this way, the terminal can select any one of the first network, the second network and the third network for reselection. In this way, the terminal can quickly and reliably complete network reselection.

In an embodiment, the network selection information may include identification information of networks available for reselection by the terminal and priorities of the corresponding networks. For example, the networks available for reselection by the terminal include a first network, a second network and a third network. Here, the first network, the second network and the third network may all be SNPNs. Identifiers of the first network, the second network and the third network are ID1, ID2 and ID3 respectively, and the corresponding priorities are a first priority, a second priority and a third priority respectively. The first priority is higher than the second priority, and the second priority is higher than the third priority. In this way, when the terminal performs network reselection, the terminal can preferentially select the first network with the first priority for reselection, and if the reselection of the first network fails, the terminal selects the second network with the second priority for reselection or selects the third network with the third priority for reselection.

In an embodiment, the priority of reselecting the network is determined according to a transmission bandwidth of the network. In an embodiment, in response to a transmission bandwidth of the first network being greater than a transmission bandwidth of the second network, it is determined that a priority of reselecting the first network is higher than a priority of reselecting the second network. In response to the transmission bandwidth of the first network being smaller than the transmission bandwidth of the second network, it is determined that the priority of reselecting the first network is lower than the priority of reselecting the second network.

In an embodiment, the priority of the network may be explicitly indicated by the network selection information. For example, a priority identifier is used to indicate the priority of the network. The networks available for reselection by the terminal include a first network, a second network and a third network. Here, the first network, the second network and the third network may all be SNPNs. The priority identifiers of the first network, the second network and the third network are U1, U2 and U3 respectively. The priority indicated by U1 is higher than the priority indicated by U2, and the priority indicated by U2 is higher than the priority indicated by U3.

In an embodiment, the priority of the network may be implicitly indicated by the network selection information. For example, the networks available for reselection by the terminal include a first network, a second network and a third network. Here, the first network, the second network and the third network may all be SNPNs. Identifiers of the first network, the second network and the third network are arranged in order in the field, then the priority of reselecting the first network is higher than the priority of reselecting the second network, and the priority of reselecting the second network is higher than the priority of reselecting the third network.

In an embodiment, the network selection information may include identification information of network groups available for reselection by the terminal. For example, the network groups available for reselection by the terminal include a first network group, a second network group and a third network group. Each network group includes at least one network. Identifiers of the first network group, the second network group and the third network group are ID1, ID2 and ID3 respectively. Here, networks in the first network group, the second network group and the third network group may all be SNPNs. In this way, the terminal can select any network from the first network group, the second network group and the third network group for reselection. In this way, the terminal can quickly and reliably complete network reselection.

In an embodiment, the network selection information may include identification information of network groups to which the networks available for reselection by the terminal belong and priorities of the corresponding network groups. For example, the network groups to which the networks available for reselection by the terminal belong include a first network group, a second network group and a third network group. Here, networks in the first network group, the second network group and the third network group may all be SNPNs. Identifiers of the first network group, the second network group and the third network group are ID1, ID2 and ID3 respectively, and the corresponding priorities are a first priority, a second priority a third priority respectively. The first priority is higher than the second priority, and the second priority is higher than the third priority. In this way, when the terminal performs network reselection, the terminal can preferentially select the network in the first network group with the first priority for reselection, and if the reselection of the network in the first network group fails, then the terminal selects the network in the second network group with the second priority for reselection, or selects the network in the third network group with the third priority for reselection.

In an embodiment, according to a transmission bandwidth of the network in the network group, the priority of reselecting the network in the network group is determined. In an embodiment, in response to a transmission bandwidth of the network in the first network group being greater than a transmission bandwidth of the network in the second network group, it is determined that the priority of reselecting the network in the first network group is higher than the priority of reselecting the network in the second network group. In response to the transmission bandwidth of the network in the first network group being smaller than the transmission bandwidth of the network in the second network group, it is determined that the priority of reselecting the network in the first network group is lower than the priority of reselecting the network in the second network group.

In an embodiment, the priority of the network group may be explicitly indicated by the network selection information. For example, a priority identifier is used to indicate the priority of the network group. The network groups available for reselection by the terminal include a first network group, a second network group and a third network group. Here, networks in the first network group, the second network group and the third network group may all be SNPNs. The priority identifiers of the first network group, the second network group and the third network group are U1, U2 and U3 respectively. The priority indicated by U1 is higher than the priority indicated by U2, and the priority indicated by U2 is higher than the priority indicated by U3.

In an embodiment, the priority of the network group may be implicitly indicated by the network selection information. For example, the network groups available for reselection by the terminal include a first network group, a second network group and a third network group. Here, networks in the first network, the second network and the third network may all be SNPNs. The identifiers of the first network group, the second network group and the third network group are arranged in order in the field, then the priority of reselecting the network in the first network group is higher than the priority of reselecting the network in the second network group, the priority of reselecting the network in the second network group is higher than the priority of reselecting the network in the third network group.

As shown in FIG. 8, a method for transmitting network selection information is provided in the embodiment. The method is performed by a second communication node, and the method includes the following.

At block 81, a network registration request message sent by a terminal is received.

At block 82, a request message for acquiring at least the network selection information is sent to the first communication node.

In an embodiment, the terminal sends a network registration request message to the second communication node. After the second communication node receives the network registration request message, the second communication node sends the request message for acquiring the network selection information to the first communication node according to context information saved in the second communication node. After receiving the request message for acquiring the network selection information, the first communication node sends the network selection information to the second communication node. After receiving the network selection information, the second communication node sends the network selection information to the terminal. After receiving the network selection information, the terminal can perform network reselection according to the network selection information.

In an embodiment, when the terminal sends the network registration request message, the second communication node sends the request message for acquiring an SoR message to the first communication node according to an identifier of an SoR update indicator in a terminal context saved in the second communication node. Here, the request message includes the network selection information.

It should be noted that those skilled in the art can understand that the methods provided in the embodiments of the present disclosure may be performed independently, or together with some methods in the embodiments of the present disclosure or some methods in the related art.

In an embodiment, the network selection information further includes feedback indication information, and the feedback indication information is configured to instruct the terminal to send feedback information after receiving the network selection information.

In an embodiment, if the network selection information received by the terminal includes the feedback indication information, the terminal sends the feedback information to the network after successfully receiving the network selection information.

In another embodiment, if the network selection information received by the terminal does not include the feedback indication information, the terminal does not send the feedback information to the network after successfully receiving the network selection information.

In an embodiment, a new field may be added to the field where the network selection information is located, and the new field is used to indicate the feedback indication information.

In an embodiment, if the network selection information is not updated, the network selection information carries a predetermined identifier; or, if the network selection information is not updated, a field indicating the network selection information is set to a predetermined value.

In an embodiment, before sending the network selection information to the second communication node, the network selection information at the current moment is compared with the network selection information sent last time to determine whether the network selection information changes. If the network selection information changes, it is determined that the network selection information is updated; if the network selection information does not change, it is determined that the network selection information is not updated.

In an embodiment, if the network selection information is not updated, the network selection information carries a predetermined identifier indicating that the network selection information does not change. After receiving the network selection information carrying the predetermined identifier, the terminal determines that the network selection information is not updated.

In another embodiment, if the network selection information is not updated, the field indicating the network selection information may be set to a predetermined value. Here, the predetermined value may be a null value. When the terminal determines that the field indicating the network selection information is set to the predetermined value, the terminal determines that the network selection information is not updated.

It should be noted that those skilled in the art can understand that the methods provided in the embodiments of the present disclosure may be performed independently, or together with some methods in the embodiments of the present disclosure or some methods in the related art.

In an embodiment, the network selection information is included in SoR information; or, the network selection information is included in UPU information.

In an embodiment, after receiving the request message for acquiring the network selection information sent by the second communication node, the first communication node may use an SoR message to send the network selection information to the second communication node.

In another embodiment, after receiving the request message for acquiring the network selection information sent by the second communication node, the first communication node may use a UPU message to send the network selection information to the second communication node.

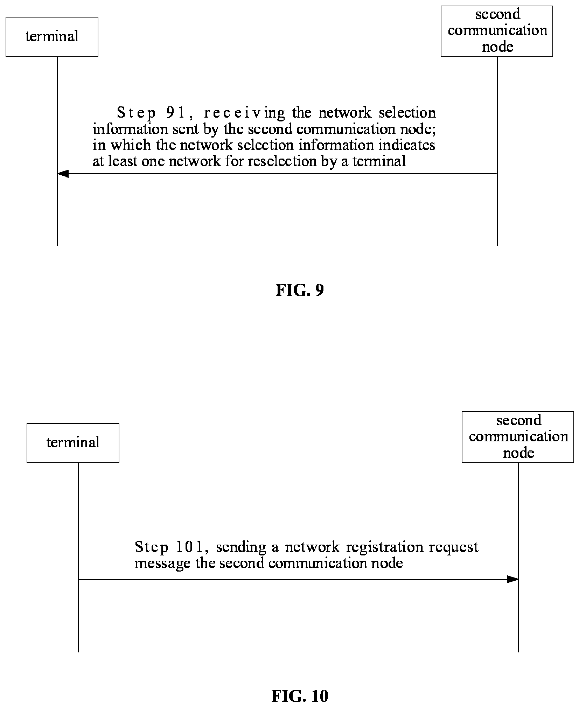

As shown in FIG. 9, a method for transmitting network selection information is provided in the embodiment. The method is performed by a terminal, and the method includes the following.

At block 91, network selection information sent by a second communication node is received.

The network selection information indicates at least one network for reselection by the terminal.

In an embodiment, a first communication node may be a unified data management (UDM, unified data management). The second communication node may be an access and mobility management function (AMF) or a mobility management entity (MME), etc. The AMF may transmit data to the terminal through a base station. Here, the base station is an interface device for the terminal to access the network. In an embodiment, the network is an SNPN.

In some embodiments, the terminal may be, but not limited to, a mobile phone, a wearable device, a vehicle-mounted terminal, a road side unit (RSU), a smart home terminal, an industrial sensor device or a medical device, etc.

In some embodiments, the base station may be various types of base stations, for example, a base station of a third-generation mobile communication (3G) network, a base station of a fourth-generation mobile communication (4G) network, a base station of a fifth-generation mobile communication (5G) network or other evolved base stations.

In an embodiment, the network selection information may include identification information of networks available for reselection by the terminal. For example, the networks available for reselection by the terminal include a first network, a second network and a third network. Identifiers of the first network, the second network and the third network are ID1, ID2 and ID3 respectively. Here, the first network, the second network and the third network may all be SNPNs. In this way, the terminal can select any one of the first network, the second network and the third network for reselection. In this way, the terminal can quickly and reliably complete network reselection.

In an embodiment, the network selection information may include identification information of networks available for reselection by the terminal and priorities of the corresponding networks. For example, the networks available for reselection by the terminal include a first network, a second network and a third network. Here, the first network, the second network and the third network may all be SNPNs. Identifiers of the first network, the second network and the third network are ID1, ID2 and ID3 respectively, and the corresponding priorities are a first priority, a second priority and a third priority respectively. The first priority is higher than the second priority, and the second priority is higher than the third priority. In this way, when the terminal performs network reselection, the terminal can preferentially select the first network with the first priority for reselection, and if the reselection of the first network fails, the terminal selects the second network with the second priority for reselection or selects the third network with the third priority for reselection.

In one embodiment, the priority of reselecting the network is determined according to a transmission bandwidth of the network. In an embodiment, in response to a transmission bandwidth of the first network being greater than a transmission bandwidth of the second network, it is determined that a priority of reselecting the first network is higher than a priority of reselecting the second network. In response to the transmission bandwidth of the first network being smaller than the transmission bandwidth of the second network, it is determined that the priority of reselecting the first network is lower than the priority of reselecting the second network.

In an embodiment, the priority of the network may be explicitly indicated by the network selection information. For example, a priority identifier is used to indicate the priority of the network. The networks available for reselection by the terminal include a first network, a second network and a third network. Here, the first network, the second network and the third network may all be SNPNs. The priority identifiers of the first network, the second network and the third network are U1, U2 and U3 respectively. The priority indicated by U1 is higher than the priority indicated by U2, and the priority indicated by U2 is higher than the priority indicated by U3.

In an embodiment, the priority of the network may be implicitly indicated by the network selection information. For example, the networks available for reselection by the terminal include a first network, a second network and a third network. Here, the first network, the second network and the third network may all be SNPNs. Identifiers of the first network, the second network and the third network are arranged in order in the field, then the priority of reselecting the first network is higher than the priority of reselecting the second network, and the priority of reselecting the second network is higher than the priority of reselecting the third network.

In an embodiment, the network selection information may include identification information of network groups available for reselection by the terminal. For example, the network groups available for reselection by the terminal include a first network group, a second network group and a third network group. Each network group includes at least one network. Identifiers of the first network group, the second network group and the third network group are ID 1, ID2 and ID3 respectively. Here, networks in the first network group, the second network group and the third network group may all be SNPNs. In this way, the terminal can select any network from the first network group, the second network group and the third network group for reselection. In this way, the terminal can quickly and reliably complete network reselection.

In an embodiment, the network selection information may include identification information of network groups to which the networks available for reselection by the terminal belong and priorities of the corresponding network groups. For example, the network groups to which the networks available for reselection by the terminal belong include a first network group, a second network group and a third network group. Here, networks in the first network group, the second network group and the third network group may all be SNPNs. Identifiers of the first network group, the second network group and the third network group are ID 1, ID2 and ID3 respectively, and the corresponding priorities are a first priority, a second priority and a third priority respectively. The first priority is higher than the second priority, and the second priority is higher than the third priority. In this way, when the terminal performs network reselection, the terminal can preferentially select the network in the first network group with the first priority for reselection, and if the reselection of the network in the first network group fails, the terminal selects the network in the second network group with the second priority for reselection, or selects the network in the third network group with the third priority for reselection.

In an embodiment, according to a transmission bandwidth of the network in the network group, the priority of reselecting the network in the network group is determined. In an embodiment, in response to a transmission bandwidth of the network in the first network group being greater than a transmission bandwidth of the network in the second network group, it is determined that the priority of reselecting the network in the first network group is higher than the priority of reselecting the network in the second network group. In response to the transmission bandwidth of the network in the first network group being smaller than the transmission bandwidth of the network in the second network group, it is determined that the priority of reselecting the network in the first network group is lower than the priority of reselecting the network in the second network group.

In an embodiment, the priority of the network group may be explicitly indicated by the network selection information. For example, a priority identifier is used to indicate the priority of the network group. The network groups available for reselection by the terminal include a first network group, a second network group and a third network group. Here, networks in the first network group, the second network group and the third network group may all be SNPNs. The priority identifiers of the first network group, the second network group and the third network group are U1, U2 and U3 respectively. The priority indicated by U1 is higher than the priority indicated by U2, and the priority indicated by U2 is higher than the priority indicated by U3.

In an embodiment, the priority of the network group may be implicitly indicated by the network selection information. For example, the network groups available for reselection by the terminal include a first network group, a second network group and a third network group. Here, networks in the first network, the second network and the third network may all be SNPNs. Identifiers of the first network group, the second network group and the third network group are arranged in order in the field, then the priority of reselecting the network in the first network group is higher than the priority of reselecting the network in the second network group, the priority of reselecting the network in the second network group is higher than the priority of reselecting the network in the third network group.

In an embodiment, referring to Table 1 again, the network selection information is explicitly indicated in a list form. Here, the networks available for reselection by the terminal include the first network, the second network and the third network, the corresponding network identifiers are SNPN ID1, SNPN ID2 and SNPN ID3 respectively, and the corresponding priorities are U1, U2 and U3 respectively. Here, the priority indicated by U1 is greater than the priority indicated by U2, and the priority indicated by U2 is greater than the priority indicated by U3.

In an embodiment, referring to Table 2 again, the network selection information is implicitly indicated in a list form. Here, the networks available for reselection by the terminal include the first network, the second network and the third network, and the corresponding network identifiers are SNPN ID1, SNPN ID2 and SNPN ID3 respectively, and the identifiers are arranged in order in the field. The priority of the first network is higher than the priority of the second network, and the priority of the second network is higher than the priority of the third network.

In an embodiment, referring to Table 3 again, the network selection information is explicitly indicated in a list form. Here, the network groups to which the networks available for reselection by the terminal belong include the first network group, the second network group and the third network group, and the identifiers of the corresponding network groups are SNPN ID1, SNPN ID2 and SNPN ID3 respectively, and the corresponding priorities are U1, U2 and U3 respectively. Here, the priority indicated by U1 is greater than the priority indicated by U2, and the priority indicated by U2 is greater than the priority indicated by U3. The first network group includes network 1, network 2 and network 3; the second network group includes network 4, network 5 and network 6; and the third network group includes network 7, network 8 and network 9.

In an embodiment, the first communication node sends the network selection information to the second communication node by using an SoR message.

In another embodiment, the first communication node sends the network selection information to the second communication node by using a UPU message.

In an embodiment, the first communication node may send the network selection information to the second communication node. After receiving the network selection information, the second communication node sends the network selection information to the terminal. After receiving the network selection information, the terminal can perform network reselection according to the network selection information.

In an embodiment, the terminal sends a network registration request message to the second communication node. After the second communication node receives the network registration request message, the second communication node sends a request message for acquiring the network selection information to the first communication node according to context information saved in the second communication node. After receiving the request message for acquiring the network selection information, the first communication node sends the network selection information to the second communication node. After receiving the network selection information, the second communication node sends the network selection information to the terminal. After receiving the network selection information, the terminal can perform network reselection according to the network selection information.

In an embodiment, if the network selection information is updated, the network selection information is sent to the second communication node. In another embodiment, the network selection information may also be sent to the second communication node periodically. Here, updating the network selection information may refer to addition, change, or priority change of the at least one network indicated by the network selection information.

It should be noted that those skilled in the art can understand that the methods provided in the embodiments of the present disclosure may be performed independently, or together with some methods in the embodiments of the present disclosure or some methods in the related art.

In an embodiment, the network selection information may include identification information of networks available for reselection by the terminal. For example, the networks available for reselection by the terminal include a first network, a second network and a third network. Identifiers of the first network, the second network and the third network are ID1, ID2 and ID3 respectively. Here, the first network, the second network and the third network may all be SNPNs. In this way, the terminal can select any one of the first network, the second network and the third network for reselection. In this way, the terminal can quickly and reliably complete network reselection.

In an embodiment, the network selection information may include identification information of networks available for reselection by the terminal and priorities of the corresponding networks. For example, the networks available for reselection by the terminal include a first network, a second network and a third network. Here, the first network, the second network and the third network may all be SNPNs. Identifiers of the first network, the second network and the third network are ID1, ID2 and ID3 respectively, and the corresponding priorities are a first priority, a second priority and a third priority respectively. The first priority is higher than the second priority, and the second priority is higher than the third priority. In this way, when the terminal performs network reselection, the terminal can preferentially select the first network with the first priority for reselection, and when the reselection of the first network fails, the terminal selects the second network with the second priority for reselection or selects the third network with the third priority for reselection.

In an embodiment, the priority of reselecting the network is determined according to a transmission bandwidth of the network. In an embodiment, in response to a transmission bandwidth of the first network being greater than a transmission bandwidth of the second network, it is determined that a priority of reselecting the first network is higher than a priority of reselecting the second network. In response to the transmission bandwidth of the first network being smaller than the transmission bandwidth of the second network, it is determined that the priority of reselecting the first network is lower than the priority of reselecting the second network.

In an embodiment, the priority of the network may be explicitly indicated by the network selection information. For example, a priority identifier is used to indicate the priority of the network. The networks available for reselection by the terminal include a first network, a second network and a third network. Here, the first network, the second network and the third network may all be SNPNs. The priority identifiers of the first network, the second network and the third network are U1, U2 and U3 respectively. The priority indicated by U1 is higher than the priority indicated by U2, and the priority indicated by U2 is higher than the priority indicated by U3.

In an embodiment, the priority of the network may be implicitly indicated by the network selection information. For example, the networks available for reselection by the terminal include a first network, a second network and a third network. Here, the first network, the second network and the third network may all be SNPNs. Identifiers of the first network, the second network and the third network are arranged in order in the field, then the priority of reselecting the first network is higher than the priority of reselecting the second network, and the priority of reselecting the second network is higher than the priority of reselecting the third network.

In an embodiment, the network selection information may include identification information of network groups available for reselection by the terminal. For example, the network groups available for reselection by the terminal include a first network group, a second network group and a third network group. Each network group includes at least one network. Identifiers of the first network group, the second network group and the third network group are ID1, ID2 and ID3 respectively. Here, networks in the first network group, the second network group and the third network group may all be SNPNs. In this way, the terminal can select any network from the first network group, the second network group and the third network group for reselection. In this way, the terminal can quickly and reliably complete network reselection.

In an embodiment, the network selection information may include identification information of network groups to which the networks available for reselection by the terminal belong and priorities of the corresponding network groups. For example, the network groups to which the networks available for reselection by the terminal belong include a first network group, a second network group and a third network group. Here, networks in the first network group, the second network group and the third network group may all be SNPNs. Identifiers of the first network group, the second network group and the third network group are ID1, ID2 and ID3 respectively, and the corresponding priorities are a first priority, a second priority a third priority respectively. The first priority is higher than the second priority, and the second priority is higher than the third priority. In this way, when the terminal performs network reselection, the terminal can preferentially select the network in the first network group with the first priority for reselection, and when the reselection of the network in the first network group fails, then the terminal selects the network in the second network group with the second priority for reselection, or selects the network in the third network group with the third priority for reselection.

In an embodiment, according to a transmission bandwidth of the network in the network group, the priority of reselecting the network in the network group is determined. In an embodiment, in response to a transmission bandwidth of the network in the first network group being greater than a transmission bandwidth of the network in the second network group, it is determined that the priority of reselecting the network in the first network group is higher than the priority of reselecting the network in the second network group. In response to the transmission bandwidth of the network in the first network group being smaller than the transmission bandwidth of the network in the second network group, it is determined that the priority of reselecting the network in the first network group is lower than the priority of reselecting the network in the second network group.

In an embodiment, the priority of the network group may be explicitly indicated by the network selection information. For example, a priority identifier is used to indicate the priority of the network group. The network groups available for reselection by the terminal include a first network group, a second network group and a third network group. Here, networks in the first network group, the second network group and the third network group may all be SNPNs. The priority identifiers of the first network group, the second network group and the third network group are U1, U2 and U3 respectively. The priority indicated by U1 is higher than the priority indicated by U2, and the priority indicated by U2 is higher than the priority indicated by U3.

In an embodiment, the priority of the network group may be implicitly indicated by the network selection information. For example, the network groups available for reselection by the terminal include a first network group, a second network group and a third network group. Here, networks in the first network, the second network and the third network may all be SNPNs. The identifiers of the first network group, the second network group and the third network group are arranged in order in the field, then the priority of reselecting the network in the first network group is higher than the priority of reselecting the network in the second network group, the priority of reselecting the network in the second network group is higher than the priority of reselecting the network in the third network group.

As shown in FIG. 10, a method for transmitting network selection information is provided in the embodiment. The method is performed by a terminal, and the method includes the following.

At block 101, a network registration request message is sent to a second communication node.

In an embodiment, the terminal sends the network registration request message to the second communication node. After the second communication node receives the network registration request message, the second communication node sends the request message for acquiring the network selection information to a first communication node according to context information saved in the second communication node. After receiving the request message for acquiring the network selection information, the first communication node sends the network selection information to the second communication node. After receiving the network selection information, the second communication node sends the network selection information to the terminal. After receiving the network selection information, the terminal can perform network reselection according to the network selection information.

In an embodiment, when the terminal sends the network registration request message, the second communication node sends the request message for acquiring an SoR message to the first communication node according to an identifier of an SoR update indicator in a terminal context saved in the second communication node. Here, the request message includes the network selection information.

It should be noted that those skilled in the art can understand that the methods provided in the embodiments of the present disclosure may be performed independently, or together with some methods in the embodiments of the present disclosure or some methods in the related art.

In an embodiment, the network selection information further includes feedback indication information, and the feedback indication information is configured to instruct the terminal to send feedback information after receiving the network selection information.

In an embodiment, if the network selection information received by the terminal includes the feedback indication information, the terminal sends the feedback information to the network after successfully receiving the network selection information.

In another embodiment, if the network selection information received by the terminal does not include the feedback indication information, the terminal does not send the feedback information to the network after successfully receiving the network selection information.

In an embodiment, a new field may be added to the field where the network selection information is located, and the new field is used to indicate the feedback indication information.

In an embodiment, if the network selection information is not updated, the network selection information carries a predetermined identifier; or, if the network selection information is not updated, a field indicating the network selection information is set to a predetermined value.

In an embodiment, before sending the network selection information to the second communication node, the network selection information at the current moment is compared with the network selection information sent last time to determine whether the network selection information changes. If the network selection information changes, it is determined that the network selection information is updated; if the network selection information does not change, it is determined that the network selection information is not updated.

In an embodiment, if the network selection information is not updated, the network selection information carries a predetermined identifier indicating that the network selection information does not change. After receiving the network selection information carrying the predetermined identifier, the terminal determines that the network selection information is not updated.

In another embodiment, if the network selection information is not updated, the field indicating the network selection information may be set to a predetermined value. Here, the predetermined value may be a null value. When the terminal determines that the field indicating the network selection information is set to the predetermined value, the terminal determines that the network selection information is not updated.

It should be noted that those skilled in the art can understand that the methods provided in the embodiments of the present disclosure may be performed independently, or together with some methods in the embodiments of the present disclosure or some methods in the related art.

In an embodiment, the network selection information is included in SoR information; or, the network selection information is included in UPU information.

In an embodiment, after receiving the request message for acquiring the network selection information sent by the second communication node, the first communication node may use an SoR message to send the network selection information to the second communication node.

In another embodiment, after receiving the request message for acquiring the network selection information sent by the second communication node, the first communication node may use a UPU message to send the network selection information to the second communication node.

In order to better understand the embodiments of the present disclosure, the following three exemplary embodiments are used to further describe the embodiments of the present disclosure.

First, the relevant terms used in each example are described as follows.

SoR information is steering of roaming information;
UE is a terminal;
UDM is a unified data management node;
NW is a network;
AMF is an access and mobility management function entity;
vAMF is an enhanced AMF;
SNPN is a stand-alone non-public network;
vSNPN is an enhanced SNPN;
ACK indication is an acknowledgment indication;
list is a list.

### Example 1:

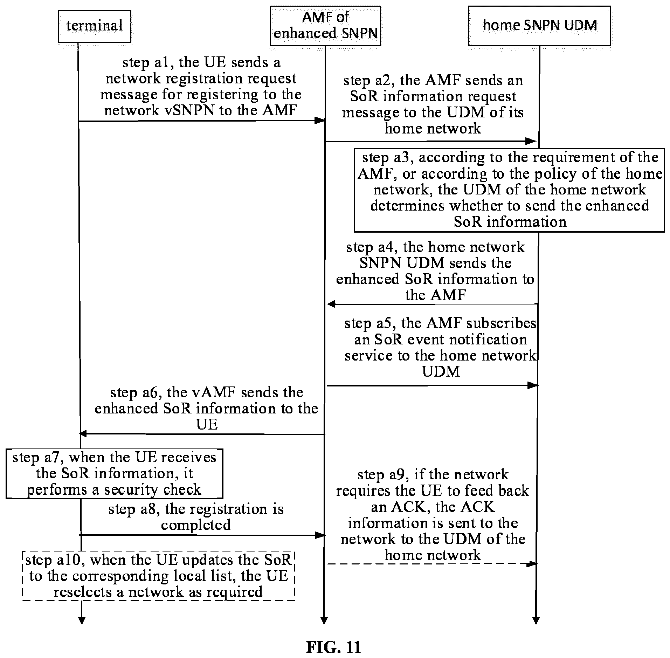

Referring to FIG. 11, a method for transmitting network selection information is provided in the embodiment. The first communication node is an UDM and the second communication node is an AMF. The method includes the following.

In step a1, the UE sends a network registration request message for registering to the network vSNPN to the AMF.

In step a2, the AMF sends an SoR information request message to the UDM of its home network.

In step a3, according to the requirement of the AMF, or according to the policy of the home network, the UDM of the home network determines whether to send the enhanced SoR information. The enhanced SoR information includes network selection information.

The network selection information includes at least one of the following:
first network selection information, configured to indicate at least one SNPN and a priority of selecting the at least one SNPN; or
second network selection information, configured to indicate at least one SNPN group and a priority of selecting the at least one SNPN group, in which the at least one SNPN group includes at least one SNPN.

These information are respectively updated in the form of lists to corresponding lists stored in the UE.

Here, the network selection information includes an ACK indication, and the ACK indication is configured to indicate whether the UE sends feedback information to the network after successful reception of the network selectin information. It is determined that the network selection information is not updated and it is determined that the network selection information carries a predetermined identifier. Or it is determined that the network selection information is not updated and it is determined that the field indicating the network selection information is set to a predetermined value.

In step a4, the home network SNPN UDM sends the enhanced SoR information to the AMF.

In step a5, the AMF subscribes an SoR event notification service to the home network UDM.

In step a6, the vAMF sends the enhanced SoR information to the UE.

In step a7, when the UE receives the SoR information, it performs a security check.

In step a8, the registration is completed.

In step a9, if the network requires the UE to feed back an ACK, the ACK information is sent to the network to the UDM of the home network.

In step a10, when the UE updates the SoR to the corresponding local list, the UE reselects a network as required.

It should be noted that those skilled in the art can understand that the methods provided in the embodiments of the present disclosure may be performed independently, or together with some methods in the embodiments of the present disclosure or some methods in the related art.

### Example 2:

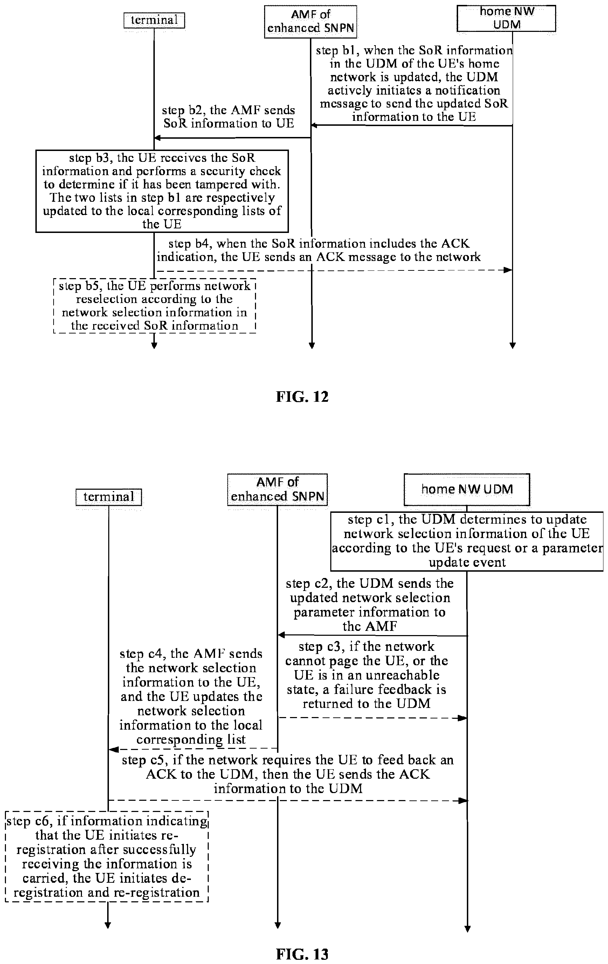

Referring to FIG. 12, a method for transmitting network selection information is provided in the embodiment. The first communication node is an UDM and the second communication node is an AMF. The method includes the following.

In step b 1, when the SoR information in the UDM of the UE's home network is updated, the UDM actively initiates a notification message to send the updated SoR information to the UE. The enhanced SoR information includes network selection information.

The network selection information includes at least one of the following:
first network selection information, configured to indicate at least one SNPN and a priority of selecting the at least one SNPN; or
second network selection information, configured to indicate at least one SNPN group and a priority of selecting the at least one SNPN group, in which the at least one SNPN group includes at least one SNPN.

These information are respectively updated to corresponding lists stored in the UE in the form of lists.

Here, the network selection information includes an ACK indication, and the ACK indication is configured to indicate whether the UE sends feedback information to the network after successful reception. It is determined that the network selection information is not updated, it is determined that the network selection information carries a predetermined identifier. Or it is determined that the network selection information is not updated, it is determined that the field indicating the network selection information is set to a predetermined value.

In step b2, the AMF sends SoR information to UE.

In step b3, the UE receives the SoR information and performs a security check to determine if it has been tampered with. The two lists in step b 1 are respectively updated to the local corresponding lists of the UE.

In step b4, when the SoR information includes the ACK indication, the UE sends an ACK message to the network.

In step b5, the UE performs network reselection according to the network selection information in the received SoR information.

### Example 3:

Referring to FIG. 13, a method for transmitting network selection information is provided in the embodiment. The first communication node is an UDM and the second communication node is an AMF. The method includes the followings.

In step c1, the UDM determines to update network selection information of the UE according to the UE's request or a parameter update event.

In step c2, the UDM sends the updated network selection parameter information to the AMF, and the network selection information includes at least one of the following:
first network selection information, configured to indicate at least one SNPN and a priority of selecting the at least one SNPN; or
second network selection information, configured to indicate at least one SNPN group and a priority of selecting the at least one SNPN group, in which the at least one SNPN group includes at least one SNPN.

In step c3, if the network cannot page the UE, or the UE is in an unreachable state, a failure feedback is returned to the UDM.

In step c4, the AMF sends the network selection information to the UE, and the UE updates the network selection information to the local corresponding list.

In step c5, if the network requires the UE to feed back an ACK to the UDM, then the UE sends the ACK information to the UDM.

In step c6, if information indicating that the UE initiates re-registration after successfully receiving the information is carried, the UE initiates de-registration and re-registration.

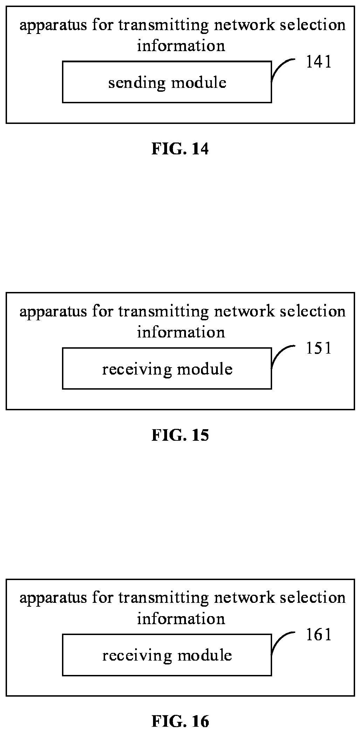

As shown in FIG. 14, an apparatus for transmitting network selection information is provided in the embodiment. The apparatus includes:
a sending module 141, configured to send the network selection information to a second communication node.

The network selection information indicates at least one network for reselection by the terminal.

It should be noted that those skilled in the art can understand that the methods provided in the embodiments of the present disclosure may be performed independently, or together with some methods in the embodiments of the present disclosure or some methods in the related art.

As shown in FIG. 15, an apparatus for transmitting network selection information is provided in the embodiment. The apparatus includes:
a receiving module 151, configured to receive the network selection information sent by a first communication node.

The network selection information indicates at least one network for reselection by the terminal.

It should be noted that those skilled in the art can understand that the methods provided in the embodiments of the present disclosure can be performed independently, or together with some methods in the embodiments of the present disclosure or some methods in the related art.

As shown in FIG. 16, an apparatus for transmitting network selection information is provided in the embodiment. The apparatus includes:

a receiving module 161, configured to receive the network selection information sent by a second communication node.

The network selection information indicates at least one network for reselection by the terminal.

An embodiment of the present disclosure provides a communication device, which includes:
a processor;
a memory for storing instructions executable by the processor;
in which the processor is configured to perform the method described in any embodiment of the present disclosure when the executable instructions are executed.

The processor may include various types of storage media, which are non-transitory computer storage media, and can continue to memorize information stored thereon after the communication device is powered off.

The processor can be connected to the memory through a bus or the like, and is configured to read the executable program stored in the memory.

An embodiment of the present disclosure further provides a computer storage medium, the computer storage medium stores a computer executable program, and when the executable program is executed by a processor, the method of any embodiment of the present disclosure is implemented.

With respect to the apparatus in the above embodiments, the specific manners for performing operations of individual modules therein have been described in detail in the embodiments regarding the methods, which will not be elaborated herein.

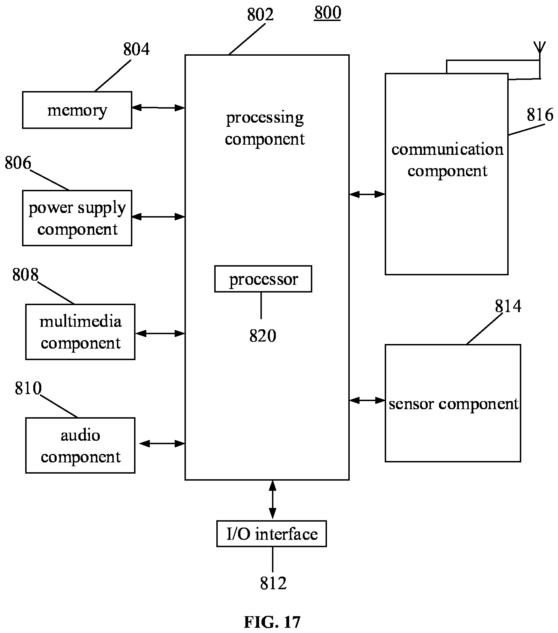

As shown in FIG. 17, an embodiment of the present disclosure provides a structure of a terminal.

Referring to the terminal 800 shown in FIG. 17, the embodiment provides the terminal 800, which specifically may be a mobile phone, a computer, a digital broadcast terminal, a messaging device, a game console, a tablet device, a medical device, a fitness device, a personal digital assistant, etc.

Referring to FIG. 17, the terminal 800 may include one or more components: a processing component 802, a memory 804, a power supply component 806, a multimedia component 808, an audio component 810, an input/output (I/O) interface 812, a sensor component 814, and a communication component 816.

The processing component 802 generally controls overall operations of the terminal 800, such as the operations related to display, phone call, data communication, camera operation and recording operation. The processing component 802 may include one or more processors 820 to perform instructions, to complete all or part of steps of the above methods. In addition, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the terminal 800. Examples of the data include the instructions of any applications or methods operated on the apparatus 800, contact data, phone book data, messages, pictures, videos, etc. The memory 804 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory(PROM), a read-only memory (ROM), a magnetic memory, a flash memory, a magnetic disk or an optical disk.

The power supply component 806 may provide power supply for all components of the terminal 800. The power supply component 806 may include power supply management system, one or more power supplies, and other units related to generating, managing and distributing power for the terminal 800.

The multimedia component 808 includes an output interface screen provided between the terminal 800 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of touch or slide action, but also detect the duration and pressure related to the touching or sliding operation. In some embodiments, the multimedia component 808 includes a front camera and/or a rear camera. When the terminal 800 is in operation mode, such as shooting mode or video mode, the front camera or the rear camera may receive the external multimedia data. Each front camera and rear camera may be a fixed optical lens system or an optical lens system with focal length and optical zoom capacity.

The audio component 810 is configured as an output and/or input signal. For example, the audio component 810 includes a microphone (MIC). When the terminal 800 is in operation mode, such as call mode, record mode, and speech recognition mode, the microphone is configured to receive the external audio signals. The audio signals received may be further stored in the memory 804 or sent via the communication component 816. In some embodiments, the audio component 810 further includes a speaker configured to output an audio signal.

The I/O interface 812 provides an interface for the processing component 802 and the peripheral interface module, and the peripheral interface module may be a keyboard, a click wheel, a button, etc. The buttons may include but not limited to a home button, a volume button, a start button and a lock button.

The sensor component 814 includes one or more sensors, configured to provide various aspects of status assessment for the terminal 800. For example, the sensor component 814 may detect the on/off state of the terminal 800 and the relative positioning of the component. For example, the component is a display and a keypad of the terminal 800. The sensor component 814 may further detect the location change of the terminal 800 or one component of the terminal 800, the presence or absence of contact between the user and the terminal 800, the orientation or acceleration/deceleration of the terminal 800, and the temperature change of the terminal 800. The sensor component 814 may include a proximity sensor, which is configured to detect the existence of the objects nearby without any physical contact. The sensor component 814 may further include a light sensor such as CMOS or CCD image sensor, which is configured to use in imaging applications. In some embodiments, the sensor component 814 may further include an acceleration transducer, a gyroscope sensor, a magnetic sensor, a pressure sensor or a temperature sensor.

The communication component 816 is configured for the convenience of wire or wireless communication between the terminal 800 and other devices. The terminal 800 may access wireless networks based on communication standard, such as WiFi, 2G or 3G or their combination. In an exemplary embodiment, the communication component 816 receives broadcast signals or broadcast-related information from an external broadcast management system via a broadcast channel. In an exemplary embodiment, the communication component 816 further includes a near field communication (NFC) module to facilitate short-range communication. For example, an NFC module may be implemented based on radio frequency identification (RFID) technology, infrared data association (IRDA) technology, ultra-wideband (UWB) technology, bluetooth (BT) technology and other technologies.

In an exemplary embodiment, the terminal 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above methods.

In an example embodiment, a non-temporary computer readable storage medium is further provided which includes instructions, such as the memory 804 including instructions. The instructions may be executed by the processor 820 of the terminal 800 to complete the above methods for behavior control. For example, the non-transitory computer readable storage medium may be a ROM, a random access memory (RAM), a CD-ROM, a magnetic tape, a floppy disk, an optical data storage device, etc.

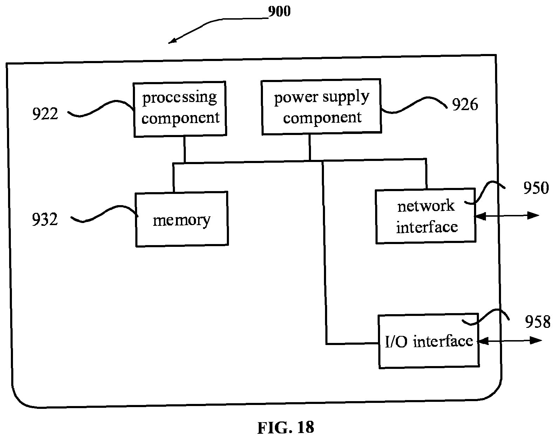

As shown in FIG. 18, an embodiment of the present disclosure shows a structure of a base station. For example, the base station 900 may be provided as a network side device. Referring to FIG. 18, base station 900 includes a processing component 922, which further includes one or more processors, and memory resources represented by a memory 932, which is configured to store instructions executed by the processing component 922, for example, an application. The applications stored in the memory 932 may include one or more modules each of which corresponds to a set of instructions. In addition, the processing component 922 is configured to execute instructions, to execute any of the methods described above applied to the base station.

The base station 900 may further include one power supply component 926 configured to execute power management of the base station 900, and one wired or wireless network interface 950 configured to connect the base station 900 to a network, and one input/output (I/O) interface 958. The base station 900 may operate an operating system stored in the memory 932, for example, Windows Server TM, Mac OS XTM, UnixTM, LinuxTM, FreeBSDTM or the like.

After considering the specification and practicing the disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present invention is not limited to the precise structure described above and shown in the drawings, and various modifications and changes may be made without departing from its scope. The scope of the present application is only limited by the appended claims.

## Claims

1. A method for transmitting network selection information, performed by a first communication node, comprising:
sending the network selection information to a second communication node;
wherein, the network selection information indicates at least one network for reselection by a terminal.

2. The method according to claim 1, wherein the at least one network is a stand-alone non-public network (SNPN).

3. The method according to claim 1, wherein the network selection information comprises at least one of the following:
first network selection information, configured to indicate at least one SNPN and a priority of selecting the at least one SNPN; or
second network selection information, configured to indicate at least one SNPN group and a priority of selecting the at least one SNPN group, wherein the at least one SNPN group comprises at least one SNPN.

4. The method according to claim 1, further comprising:
receiving a request message for acquiring the network selection information sent by the second communication node.

5. The method according to claim 1, wherein the network selection information further comprises feedback indication information, and the feedback indication information is configured to instruct the terminal to send feedback information after receiving the network selection information.

6. The method according to claim 1, further comprising:
determining that the network selection information is not updated, and determining that the network selection information carries a predetermined identifier; or
determining that the network selection information is not updated, and determining that a field indicating the network selection information is set to a predetermined value.

7. The method according to claim 1, wherein sending the network selection information to the second communication node further comprises:
determining that the network selection information is updated; and
sending updated network selection information to the second communication node.

8. The method according to claim 1, wherein the network selection information is comprised in steering of roaming (SoR) information; or, the network selection information is comprised in user equipment (UE) parameter update UPU information.

9. A method for transmitting network selection information, performed by a second communication node, comprising:
receiving the network selection information sent by a first communication node;
wherein, the network selection information indicates at least one network for reselection by a terminal.

10. The method of claim 9, wherein the at least one network is a stand-alone non-public network (SNPN).

11. The method according to claim 9, further comprising:
sending the network selection information to the terminal.

12. The method according to claim 9, wherein the network selection information comprises at least one of the following:
first network selection information, configured to indicate at least one SNPN and a priority of selecting the at least one SNPN; or
second network selection information, configured to indicate at least one SNPN group and a priority of selecting the at least one SNPN group, wherein the at least one SNPN group comprises at least one SNPN.

13. The method according to claim 9, further comprising:
receiving a network registration request message sent by the terminal; and
sending a request message for acquiring at least the network selection information to the first communication node.

14. The method according to claim 9, wherein the network selection information further comprises feedback indication information, and the feedback indication information is configured to instruct the terminal to send feedback information after receiving the network selection information.

15. The method according to claim 9, wherein,
if the network selection information is not updated, the network selection information carries a predetermined identifier; or
if the network selection information is not updated, a field indicating the network selection information is set to a predetermined value.

16. The method according to claim 9, wherein the network selection information is comprised in steering of roaming (SoR) information; or, the network selection information is comprised in user equipment (UE) parameter update UPU information.

17. A method for transmitting network selection information, performed by a terminal, comprising:
receiving the network selection information sent by a second communication node;
wherein, the network selection information indicates at least one network for reselection by the terminal.

18. The method of claim 17, wherein the at least one network is a stand-alone non-public network (SNPN).

19. The method according to claim 17, wherein the network selection information comprises at least one of the following:
first network selection information, configured to indicate at least one SNPN and a priority of selecting the at least one SNPN; or
second network selection information, configured to indicate at least one SNPN group and a priority of selecting the at least one SNPN group, wherein the at least one SNPN group comprises at least one SNPN.

20. The method according to claim 17, further comprising:
sending a network registration request message to the second communication node.

21. The method according to claim 17, wherein the network selection information further comprises feedback indication information, and the feedback indication information is configured to instruct the terminal to send feedback information after receiving the network selection information.

22. The method according to claim 17, wherein,
if the network selection information is not updated, the network selection information carries a predetermined identifier; or
if the network selection information is not updated, a field indicating the network selection information is set to a predetermined value.

23. The method according to claim 17, wherein the network selection information is comprised in steering of roaming (SoR) information; or, the network selection information is comprised in user equipment (UE) parameter update UPU information.

24. An apparatus for transmitting network selection information, comprising:
a sending module, configured to send the network selection information to a second communication node;
wherein, the network selection information indicates at least one network for reselection by a terminal.

25. An apparatus for transmitting network selection information, comprising:
a receiving module, configured to receive the network selection information sent by a first communication node;
wherein, the network selection information indicates at least one network for reselection by a terminal.

26. An apparatus for transmitting network selection information, wherein the device includes:
a receiving module, configured to receive the network selection information sent by a second communication node;
wherein, the network selection information indicates at least one network for reselection by a terminal.

27. A communication device, comprising:
an antenna;
a memory;
a processor, respectively connected to the antenna and the memory, and configured to control the antenna to send and receive and to perform the method according to any of claims 1 to 8 or claims 9 to 16 or claims 17 to 23 by executing computer-executable instructions stored in the memory.

28. A computer storage medium, having computer-executable instructions stored thereon, and the computer-executable instructions are executed by a processor to perform the method according to any of claims 1 to 8 or claims 9 to 16 or claims 17 to 23.
